# EUROPEAN PATENT SPECIFICATION

(11) **EP 0 479 519 B1**
(45) Date of publication and mention of the grant of the patent: **13.07.1994**
(21) Application number: 91308915.7
(22) Date of filing: 30.09.1991
(51) Int. Cl.: F16L 53/00

(54) **Coupling device for pipeline heating system**
Verbindungseinrichtung für Pipeline-Heizsystem
Raccord pour système de chauffage de pipeline

(30) Priority: 02.10.1990 BR 9004940
(43) Date of publication of application: 08.04.1992
(73) Proprietor: PETROLEO BRASILEIRO S.A. - PETROBRAS, Rio de Janeiro (BR)
(72) Inventor: Goncalves, Carlos Alberto de Castro, Rio de Janeiro (BR)
(74) Representative: Barlow, Roy James

(56) References cited:
- DE-C- 2 315 268
- GB-A- 2 084 284
- GB-A- 2 143 606
- US-A- 2 224 403
- US-A- 4 447 707

## Description

This invention relates to a device for the coupling of fluid-carrying subsea pipelines, allowing for the passage of an electric current through same, with the purpose of electrically heating those pipelines for preventing or eliminating deposits of organic residues at the internal walls of said pipelines. Such a device may be adapted to allow for the utilization of electricity combined with the simultaneous injection of special fluids, such as solvents, air or steam.

In the case of the operation with subsea facilities for transportation of fluids, particularly fluids which are viscous and/or contain organic residues, one of the problems to be faced concerns obstruction in the pipelines, due to the deposition of those residues on the internal walls of the pipelines, caused by the temperature differential between the environment and the fluid being transported.

It is well-known that in regions of great water depths the temperature of the water reaches nearly 5°C. This may differ greatly from the temperatures of fluids being pumped through pipelines at those depths. The greater is this temperature differential the greater will be the extent of the above problems, since the tendency towards the formation of deposits will increase, leading to total obstruction of the pipeline.

One alternative to overcome this problem consists of applying a pressure differential between the extremities of the pipeline with the purpose of forcing the fluid flow. However, when said pipelines are too long, the possibilities of utilization of that method become unfeasible, whether from the technical point of view due to the dimensions of the equipment, or from the economic point of view.

Another known alternative consists of adding, to the fluid being carried, a special additive or solvent so as to maintain the organic residues in solution.

A third alternative to prevent or minimize the formation of residues at the pipeline walls includes maintaining said pipeline walls heated, so that the temperature differential between same and the environment will be sufficient to ensure the fluid flow.

This invention relates to this last possibility, combining it, if required, with the use of special solvents for the fluid being transported. The technical problem to be overcome consists of finding a way of introducing electricity into the subsea pipelines, particularly when these pipelines are already installed at some hundreds of meters of depth.

It is well-known that, when an electric current is applied to an electric conductor, a certain quantity of energy is transformed into heat. This phenomenon is known as the Joule Effect and is widely applied in various technical areas.

In the automotive industry, for instance, we may mention US Patent 4815769, in which is described a device to achieve the connection or distribution between fluid-carrying hoses and a heating element, with the purpose of preventing the fluid from congealing inside said hoses. In a portion of the hose a slot is opened in the wall, and a heating wire is inserted therein. One extremity of the wire is connected to and wound around a contact element, made of a heat-conducting material, which is lodged inside the hose; the other extremity extends outside the hose, and is connected to a heating wire of a connector. The assembly is covered by an isolating coating so as to form a compact block, constituting a hose element which can be heated.

In the area of petroleum production the Joule effect is utilized in our Brazilian Application PI 8692278, to heat a petroleum production string inside a well, the production flow of which was interrupted due to paraffin deposition inside the string, which prevented the pumping rod from moving.

The process, however, comes up against technical difficulties for application in subsea wells.

Due to the handling facility in the offshore petroleum production systems, the production lines, that is the connections between the well and the platform, are achieved by means of flexible pipelines. These flexible pipelines are formed basically by alternate layers of steel spirals intercalated with layers of an isolating material as, for instance, a polyamide-based elastomer. The internal steel layer is interlocked, whereas the outermost layer is constituted by a cross-shield, with the purpose of providing the pipeline with a stronger structural reinforcement, this whole set being coated with a polyamide layer.

Thus, it is one object of this invention to make an electric current cross the steel shield of the flexible pipeline, similarly to an electric conductor, generating energy and dissipating a certain quantity of heat to the pipeline and to the fluid contained therein, for maintaining the temperature differential between the environment and the production line, so as not to interrupt the fluid flow.

Another object of this invention is to provide a device allowing for the introduction of electric current in subsea production lines.

Another object of this invention is to provide a device allowing for the simultaneous use of electric current and fluid injection in subsea production lines, with the purpose of eliminating and/or displacing obstructions caused by deposition of organic residues inside the lines.

Still another object of this invention is to provide a device to achieve the electric connection between (a) the internal wall of a flexible pipeline and (b) a pipeline for injection of special fluids, to be coupled to the production line.

Accordingly this invention provides a pipeline with a heating system, characterized by including a segment of electrically-conducting pipe which is introduced in a terminal pipe of the flexible pipeline and is maintained spaced from the internal steel layer of said flexible pipeline by means of electrically-isolating means, said pipe segment having at its end within the flexible pipeline a fastening element which also achieves electric contact between the flexible pipeline and the segment of electrically-conducting pipe, said segment being adapted to be connected to a source of electric power.

The other end of the electrically conducting pipe segment can be connected to an electric source or to an electric cable and can be fastened to the terminal pipe of the flexible pipeline by means of a sealing element and a coupling element, to ensure the tightness of the assembly to the penetration of moisture and sea water, or to the leaking of fluid from inside the production line while the obstruction is being eliminated.

Further characteristics and advantages of this invention will become more evident from the following detailed description of the invention, taken as a whole in conjunction with the Figures which accompany this specification. In the drawings:-
FIGURE 1 represents schematically a terminal pipe of a conventional flexible pipeline; and
FIGURE 2 shows the coupling device of the invention, fastened inside the terminal pipe of a flexible pipeline.

The drawings show a device which allows for the coupling of flexible pipelines for operation in a heating system for the pipelines, particularly in the case of transportation of fluids which are viscous and/or contain dissolved organic residues, through subsea facilities. The device allows for the introduction of an electric current in the internal steel mesh of said pipelines, generating sufficient heat to cause the displacement of organic residues deposited on the internal surface of the pipelines which would eventually lead to the obstruction of the pipelines, as well as to maintain the temperature differential between the transported fluid and the external environment between values adequate to ensure the fluid flow.,

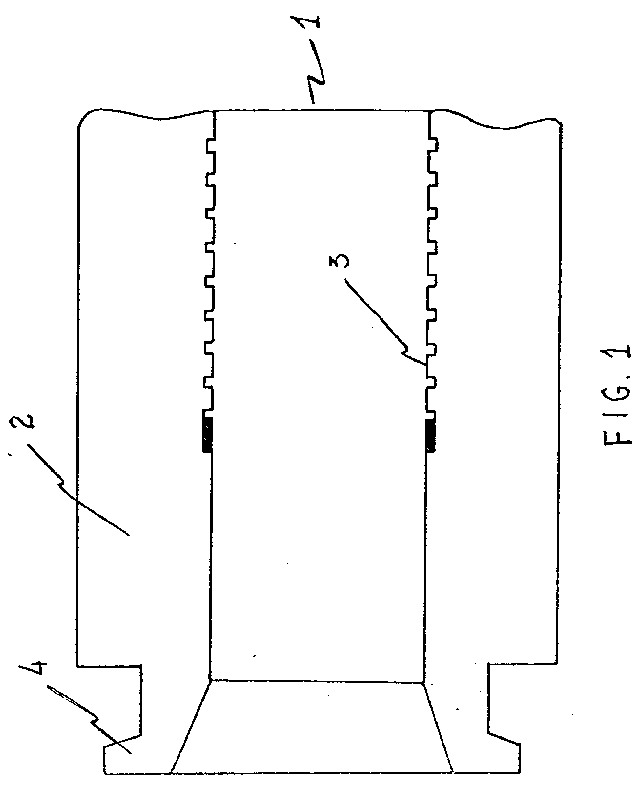

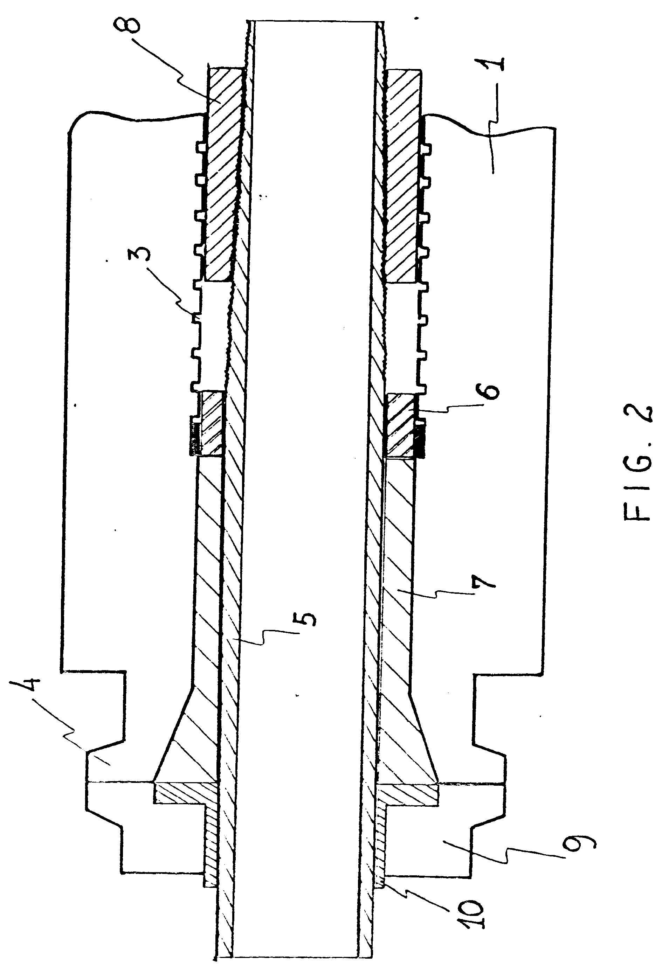

As represented on Figure 1, in the terminal pipe of a flexible pipeline 1, the external mesh 2 and elastomer layers extend a little beyond the internal steel layer 3 and form an end 4 to allow for the coupling of the pipeline to other segments of flexible pipeline or to the inlet and outlet pipes of equipment sets installed at the platform, or at the manifolds, or else at the wellhead. These couplings are achieved by means of special clamps or brackets (not shown on Figures 1 and 2), which maintain those ends tightly fastened together.

The device of this invention is introduced through the terminal pipe 1 so as to allow an electric current to flow in the internal steel layer 3 of said terminal pipe.

Figure 2 shows in detail the device of the invention, lodged and fastened to the terminal pipe 1 shown on Figure 1.

A segment of electrically-conducting pipe 5, for instance a steel pipe, is introduced into the terminal pipe of a flexible pipeline 1, being maintained coaxial with and spaced from the internal walls of the terminal pipe by means of electrically-isolating elements 6, 7 made of a material well known to the man in the art, for example those known by the Trade Marks TEFLON (polytetrafluoroethylene), or CELERON. The electric contact between the two pipes - the terminal pipe and electrically-conducting pipe 5 - is achieved by means of a fastening element 8 affixed to the internal end of the segment 5 of electrically-conducting pipe which has a thickness sufficient to contact the internal steel layer 3 of the flexible pipeline. To ensure the tightness of the assembly, a terminal element 9 is coupled to the end 4 of the terminal pipe of the flexible pipeline, the terminal element 9 having the same external profile of said end 4, so as to allow for the fastening and coupling of the two edges by means of clamps or brackets, as already described. The terminal element 9 is isolated from the electrically-conducting pipe 5 by means of another sealing element 10, which also provides the electric isolation between the pipelines.

If required, the electrically-conducting pipe 5 may be connected to a bifurcation of a "T" or "Y" shape (not shown in the Figures), so as to allow for the introduction of the special fluid into the production line simultaneously with the application of electricity.

Therefore, in practice, for the utilization of the system it will be sufficient to disconnect the ends of the obstructed pipe or line, to couple thereto two devices of this invention, and to connect them to the source of electric power.

A major advantage of the coupling device of this invention, in relation to the electric connectors of the prior art, is that electricity is conducted through an electrically-conducting pipe which may allow for the simultaneous introduction of special fluids, such as solvents, air or water, thus making it possible to optimize the pipeline heating system, more particularly the use of heat for pipeline clearing. The combined use of heat and fluid injection provides that, as the displacement of the organic residue from the internal walls of the flexible pipeline is achieved, the solvent, the air, or the steam-generated by water heating helps to displace the block of residues (or its fragments), opening ways through those materials and making it possible consequently to displace the fluid, and to re-establish the conditions for restoring the regular production flow.

Another advantage relates to the operational simplicity of the device and its coupling to already installed production lines, in addition to the low cost of manufacturing and installation, dispensing with the use of special equipment sets for its utilization.

Still another advantage is that the combination of those resources permits the clearing of the pipeline without the temperature being too high, which could damage the structure of the pipeline carrying viscous fluids. The ideal is to maintain the temperature in the range of 40-60°C.

## Claims

1. A flexible pipeline with a heating system, characterized by including a segment (5) of electrically-conducting pipe which is introduced in a terminal pipe of the flexible pipeline (1) and is maintained spaced from the internal steel layer (3) of said flexible pipeline (1) by means of electrically-isolating means (6, 7), said pipe segment (5) having at its end within the flexible pipeline a fastening element (8) which also achieves electric contact between the flexible pipeline (3) and the segment (5) of electrically-conducting pipe, said segment (5) being adapted to be connected to a source of electric power.

2. A pipeline according to claim 1, characterised in that said other end of said segment of electrically-conducting pipe is fastened to the terminal pipe (1) of the flexible pipeline by means of a sealing element (10) and a terminal coupling element (9).

3. A pipeline according to claim 2, characterised in that said sealing element (10) electrically isolates said segment (5) of electrically-conducting pipe from said terminal coupling element (9).

4. A pipeline according to any one of claims 1 to 3, characterized by said electricity-conducting pipe segment (5) being connected to a bifurcation of "T" or "Y" shape to allow the injection of special fluids, such as solvents, air or water, simultaneously with the application of electricity to said electrically-conducting pipe segment (5).

5. A pipeline according to any one of claims 1 to 4, characterized by being installed for the heating of pipelines at the sea bottom.

## Patentansprüche

1. Eine flexible Rohrleitung mit einem Heizsystem, dadurch gekennzeichnet, daß sie ein Segment (5) eines elektrisch leitenden Rohres enthält, das in ein Anschlußrohr der flexiblen Rohrleitung (1) eingeführt ist und von der inneren Stahlschicht (3) der flexiblen Rohrleitung (1) mittels elektrisch isolierender Mittel (6, 7) beabstandet gehalten wird, wobei das Rohrsegment (5) an seinem Ende innerhalb der flexiblen Rohrleitung ein Halterungs- bzw. Befestigungselement (8) aufweist, welches auch einen elektrischen Kontakt zwischen der flexiblen Rohrleitung (3) und dem Segment (5) des elektrisch leitenden Rohres bewirkt, wobei das Segment (5) derartig ausgebildet ist, daß es in der Lage ist, an eine Quelle elektrischer Leistung angeschlossen zu werden.

2. Eine Rohrleitung nach Anspruch 1, dadurch gekennzeichnet, daß das andere Ende des Segmentes des elektrisch leitenden Rohres an das Anschlußrohr (1) der flexiblen Rohrleitung mittels eines Dichtelementes (10) und eines Anschlußkupplungselementes (9) angeschlossen ist.

3. Eine Rohrleitung nach Anspruch 2, dadurch gekennzeichnet, daß das Dichtelement (10) das Segment (5) des elektrisch leitenden Rohres von dem Anschlußkupplungselement (9) elektrisch isoliert.

4. Eine Rohrleitung nach einem der Ansprüche 1 bis 3, dadurch gekennzeichnet, daß das elektrisch leitende Rohrsegment (5) an eine Verzweigung bzw. Abzweigung in "T"- oder "Y"-Form angeschlossen ist, um die Injektion bzw. Einleitung spezieller Fluide, wie z. B. Lösungs- beziehungsweise Verdünnungsmittel, Luft oder Wasser, gleichzeitig mit der Anwendung von Elektrizität auf das elektrisch leitende Rohrsegment (5) zu ermöglichen.

5. Eine Rohrleitung nach einem der Ansprüche 1 bis 4, dadurch gekennzeichnet, daß sie für das Heizen von Rohrleitungen am Meeresboden installiert ist.

## Revendications

1. Pipeline flexible avec un système de chauffage, caractérisé par un segment (5) de tube électriquement conducteur qui est introduit dans un tube terminal du pipeline flexible (1) et est maintenu séparé de la couche d'acier interne (3) de ce pipeline flexible (1) par des moyens électriquement isolants (6, 7), ce segment de tube (5) présentant à son extrémité située à l'intérieur du pipeline flexible un élément de fixation (8) qui réalise également un contact électrique entre le pipeline flexible (3) et le segment (5) de tube électriquement conducteur, ce segment (5) étant adapté pour être connecté à une source de courant électrique.

2. Pipeline selon la revendication 1, caractérisé en ce que l'autre extrémité dudit segment de tube électriquement conducteur est fixée au tube terminal (1) du pipeline flexible au moyen d'un élément d'étanchéité (10) et d'un élément de raccord terminal (9).

3. Pipeline selon la revendication 2, caractérisé en ce que l'élément d'étanchéité (10) isole électriquement ledit segment (5) de tube électriquement conducteur dudit élément de raccord terminal (9).

4. Pipeline selon l'une quelconque des revendications 1 à 3, caractérisé en ce que ledit segment de tube électriquement conducteur (5) est raccordé à une bifurcation en forme de "T" ou de "Y" afin de permettre l'injection de fluides spéciaux, tels que des solvants, de l'air ou de l'eau, en même temps que l'application d'électricité audit segment de tube électriquement conducteur (5).

5. Pipeline selon l'une quelconque des revendications 1 à 4, caractérisé en ce qu'il est installé pour le chauffage de pipelines en fond de mer.
